# DEMANDE DE BREVET EUROPEEN

(11) **EP 4 007 073 A1**
(43) Date de publication de la demande: **01.06.2022**
(21) Numéro de dépôt: 21210517.5
(22) Date de dépôt: 25.11.2021
(51) Int. Cl.: H01R 4/30, H01B 1/02, H01R 4/34, H01R 25/14, H02B 1/20, H02G 5/00, H02G 5/02, H02B 1/01

(54) **CONDUCTEURS ÉLECTRIQUES ET ENSEMBLE DE RACCORDEMENT ÉLECTRIQUE COMPORTANT UN TEL CONDUCTEUR ÉLECTRIQUE**

(30) Priorité: 26.11.2020 FR 2012188
(71) Demandeur: Schneider Electric Industries SAS, 92500 Rueil-Malmaison (FR)
(72) Inventeur: LEPRETRE, Pascal, 73800 PORTE-DE-SAVOIE (FR); DESLANDRES, Alice, 38190 BERNIN (FR); GERBIER, Philippe, 38330 SAINT ISMIER (FR)
(74) Mandataire: Lavoix

(57) **Abrégé**

Un conducteur électrique (2) hybride comporte:
- un corps (20) métallique en aluminium ayant une forme de barreau et s'étendant selon un axe longitudinal (X2),
- une pluralité de rainures de fixation (24) ménagées sur une face principale (23) du corps métallique, les rainures de fixation (24) s'étendant parallèlement à l'axe longitudinal, l'une des rainures de fixation étant disposée au centre de ladite face principale, les autres rainures de fixation étant disposées symétriquement de part et d'autre de la rainure de fixation centrale,
- des pistes de contact électrique (28) réalisées dans un matériau électriquement conducteur différent du corps métallique, et disposées par paire sur le corps métallique parallèlement aux bords latéraux de chaque rainure de fixation (24) sur ladite face principale.

## Description

La présente divulgation se rapporte à la distribution d'électricité et concerne notamment des connecteurs électriques utilisables dans un tableau de distribution d'électricité.

Dans les installations de distribution d'électricité, notamment dans le domaine de la distribution d'électricité à basse tension (1000 V AC / 1500 V DC ou moins), il est connu d'utiliser des jeux de barres de raccordement métalliques (« busbars » en anglais), communément réalisées en cuivre, pour connecter une source d'énergie électrique à une ou plusieurs charges électriques. Les barres de raccordement permettent de distribuer et de répartir l'électricité entre plusieurs appareils et/ou groupes de conducteurs grâce à des raccordements ménagés dans des armoires électriques ou des tableaux électriques.

La demande de brevet FR 2792123 A1 décrit un exemple d'agencement de barres de raccordement dans une cellule électrique. Les barres sont réalisées en cuivre et sont interconnectées au moyen de dispositifs mécaniques. De telles barres de raccordement ont pendant longtemps donné satisfaction.

Il existe toutefois un besoin pour des dispositifs de connexion présentant des performances accrues, par exemple pour fonctionner avec des calibres en courant élevés, notamment supérieurs ou égaux à 5000 A ou à 6300 A, tout en étant moins coûteux à fabriquer.

A cet effet, un aspect de l'invention concerne un conducteur électrique hybride comportant :
- un corps métallique en aluminium ayant une forme de barreau et s'étendant selon un axe longitudinal,
- une pluralité de rainures de fixation ménagées sur une face principale du corps métallique, les rainures de fixation s'étendant parallèlement à l'axe longitudinal, l'une des rainures de fixation étant disposée au centre de ladite face principale, les autres rainures de fixation étant disposées symétriquement de part et d'autre de la rainure de fixation centrale,
- des pistes de contact électrique, réalisées dans un matériau électriquement conducteur différent du corps métallique, disposées par paire sur le corps métallique parallèlement aux bords latéraux de chaque rainure de fixation.

Selon des aspects avantageux mais non obligatoires, un tel conducteur électrique peut incorporer une ou plusieurs des caractéristiques suivantes, prises isolément ou suivant toute combinaison techniquement admissible :
- La section du corps est de forme essentiellement parallélépipédique.
- Le matériau électriquement conducteur des pistes de contact électrique est du cuivre, ou de l'étain, ou un alliage de cuivre/étain, ou d'un alliage de ces matériaux, ce matériau électriquement conducteur étant déposé sur la surface du corps, l'épaisseur de chaque piste de contact étant inférieure ou égale à 500 microns.
- Le corps comporte des ailettes de refroidissement disposées sur une face à l'opposé de la face principale sur laquelle sont ménagées les rainures de fixation, les ailettes de refroidissement étant alignées parallèlement à la direction longitudinale.
- Le corps comporte un traitement de surface tel qu'une peinture ou une anodisation pour favoriser les échanges thermiques par radiation.
- Des dents de fixation sont ménagées sur les bords latéraux du corps en aluminium.
- Le corps comporte un évidement qui s'étend longitudinalement selon l'axe longitudinal, la section transversale de l'évidement comportant une paroi convexe tournée vers la face principale sur laquelle sont ménagées les rainures de fixation.
- Le corps comporte trois desdites rainures de fixation.

Selon un autre aspect, l'invention concerne un ensemble de raccordement électrique comportant une pluralité de conducteurs électriques tel que précédemment décrits, au moins une plaque de connexion et au moins un élément de fixation, la plaque de connexion étant associée à au moins deux conducteurs électriques pour les raccorder électriquement l'un avec l'autre, ledit au moins un élément de fixation étant associé à la plaque de connexion et étant au moins partiellement reçu dans une rainure correspondante d'au moins un des conducteurs électriques.

Selon un autre aspect, l'invention concerne une installation de distribution d'électricité comportant une armature, un ensemble de raccordement électrique tel que précédemment décrit et au moins un appareil électrique raccordé à au moins une partie des conducteurs de l'ensemble de raccordement.

L'invention sera mieux comprise et d'autres avantages de celle-ci apparaîtront plus clairement à la lumière de la description qui va suivre d'un mode de réalisation d'un conducteur électrique donnée uniquement à titre d'exemple et faite en référence aux dessins annexés, dans lesquels :
[Fig 1] la figure 1 représente schématiquement une armoire électrique ;
[Fig 2] la figure 2 représente schématiquement un conducteur électrique selon un premier mode de réalisation de l'invention, vu selon une première direction d'observation ;
[Fig 3] la figure 3 représente schématiquement le conducteur électrique de la figure 2, vu selon une deuxième direction d'observation ;
[Fig 4] la figure 4 représente schématiquement un jeu de barres de raccordement électrique comportant un conducteur électrique selon les figures 2 et 3 ;
[Fig 5] la figure 5 représente schématiquement un conducteur électrique selon un deuxième mode de réalisation de l'invention.

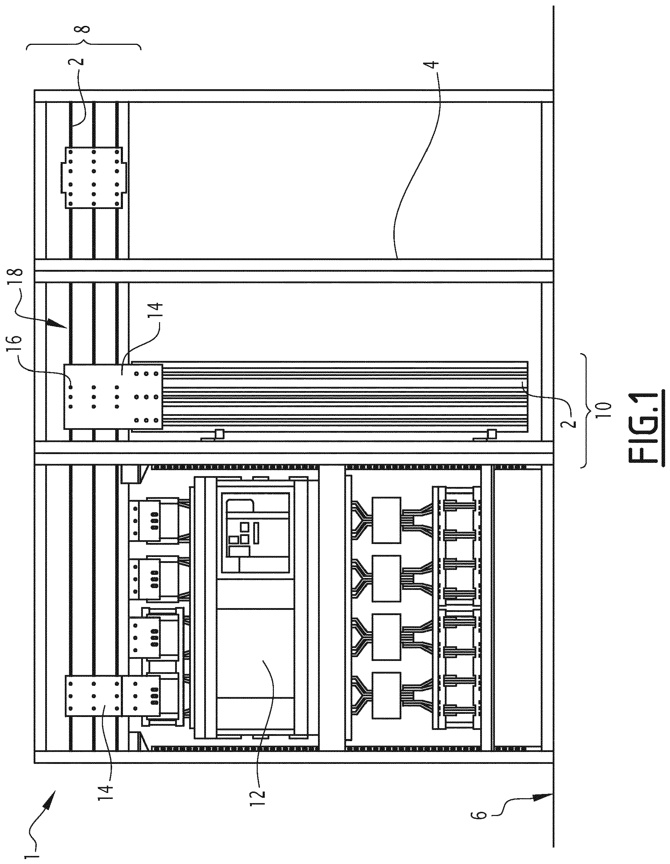

La figure 1 représente une installation de distribution d'électricité 1, telle qu'une armoire électrique ou un tableau électrique.

L'installation 1 comporte une pluralité de conducteurs électriques 2, ou barres de raccordement, qui sont de préférence disposés dans une armature 4 qui est ici posée ou fixée sur le sol 6.

Dans l'exemple illustré, un premier groupe 8 de conducteurs électriques 2 est disposé horizontalement, tandis qu'un deuxième groupe 10 de conducteurs électriques 2 est disposé verticalement.

Par exemple, dans le cas d'une installation polyphasée, c'est-à-dire une installation permettant de distribuer un courant alternatif, alors chaque phase électrique (de même que le neutre, le cas échéant) peut être associée à un conducteur 2.

Les conducteurs 2 du premier groupe 8 sont raccordés aux connecteurs 2 respectifs du deuxième groupe 10. Un ou plusieurs appareils électriques 12 sont connectés à une ou à plusieurs des conducteurs électriques 2 du premier groupe de barres 8. Les connexions peuvent être assurées grâce à des plaques de raccordement 14 en métal, qui sont maintenues plaquées contre les conducteurs 2 correspondants par l'intermédiaire d'éléments de fixation 16, tels que des vis, ou des éclisses, ou tout autre élément mécanique approprié, qui coopèrent avec des rainures 18 ménagées le long des conducteurs 2.

On comprendra néanmoins que l'exemple de la figure 1 est donné à des fins d'illustration et que d'autres agencements sont possibles en variante.

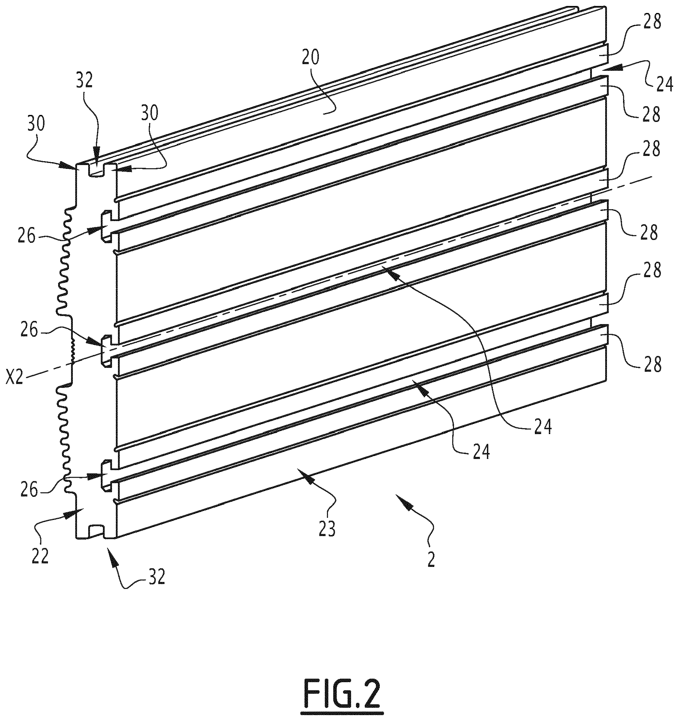

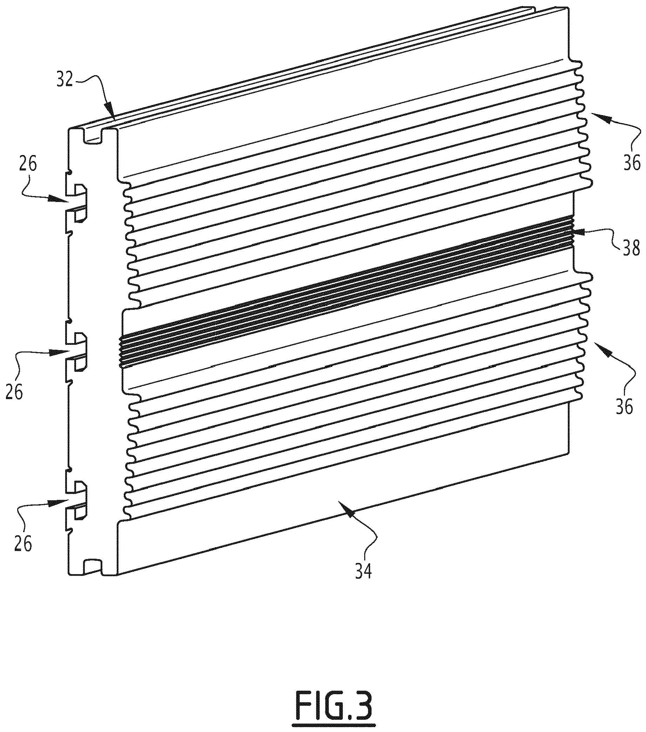

Les figures 2 et 3 représentent une portion d'un conducteur électrique 2, vue selon deux angles différents.

Le conducteur 2 comporte un corps métallique 20 en aluminium ayant une forme de barreau et s'étendant selon un axe longitudinal, noté X2 sur la figure 2.

De préférence, la section transversale 22 du corps 20 a une forme parallélépipédique ou essentiellement parallélépipédique. Dans le mode de réalisation visible sur les figures 2 et 3, le conducteur 2 présente une forme de barreau plat.

De préférence, la section transversale 22 du corps 20 est supérieure ou égale à 9000mm², ou de préférence supérieure ou égale à 9600mm².

Par exemple, le corps 20 est obtenu par un procédé d'extrusion.

Le conducteur 2 comporte une face principale avant, désignée « 23 » dans ce qui suit, et une face principale arrière. Les faces principales sont ici les faces qui sont parallèles à l'axe X2, qui sont perpendiculaires aux sections transverses 22, et qui présentent les plus grandes superficies.

On comprend que les qualificatifs « avant » et « arrière » ne sont pas limitatifs et qu'ils sont principalement dépendant de l'orientation du conducteur 2.

Le conducteur 2 comporte une pluralité de rainures de fixation 24 ménagées sur une face principale du corps métallique, ici sur la face avant 23. Les rainures de fixation 24 s'étendent parallèlement à l'axe longitudinal X2.

On notera que les rainures 24 correspondant aux rainures désignées par la référence « 18 » sur la figure 1.

Avantageusement, l'une des rainures de fixation 24 est disposée au centre de ladite face principale 23, le long de l'axe X2. Les autres rainures de fixation 24 sont disposées symétriquement de part et d'autre de la rainure de fixation centrale, sur la même face du corps 20, parallèlement à l'axe X2.

Par exemple, les rainures 24 présentent une forme rectiligne.

Chacune des rainures 24 est prolongée à l'intérieur du corps 20 par un évidement 26 qui a ici une forme de tranchée ou de champignon. L'évidement 26 s'étend de façon rectiligne sous chaque rainure 24 le long du conducteur 2. Par exemple, l'évidement 26 est configuré pour recevoir une tête d'une vis ou, plus généralement, une portion de retenue d'un élément de fixation 16.

Avantageusement, le conducteur 2 comporte trois rainures : une rainure centrale et deux rainures latérales, disposées chacune d'un côté de la rainure centrale.

Cette disposition permet de faire circuler, pour un seul conducteur 2, des courants électriques d'intensité élevée, par exemple d'intensité pouvant aller jusqu'à 6300 A.

La disposition symétrique des rainures 24 permet d'assurer une répartition uniforme du courant électrique dans le conducteur 2, et d'améliorer la dissipation thermique et d'équilibrer les points d'échauffement présents au niveau des interconnexions et des points de contact avec les plaques 14 et/ou avec les éléments de fixation 16.

Grâce à la disposition symétrique des rainures 24, le conducteur 2 ne présente pas de sens de montage préférentiel, ce qui permet de faciliter l'assemblage du conducteurs 2 avec d'autres éléments, par exemple pour former l'installation 1.

Grâce à la disposition des rainures 24, la mise en place des éléments de fixation 16 s'effectue sans opération supplémentaire dans le conducteur 2 (telle qu'un perçage) en face avant par l'évidement 26, ce dernier formant une ligne de serrage continue dans le conducteur 2.

De façon préférentielle, le conducteur 2 comporte des pistes de contact électrique 28 qui sont disposées par paire parallèlement aux bords latéraux de chaque rainure de fixation 24. Les pistes de contact 28 sont réalisées dans un matériau électriquement conducteur différent du matériau utilisé pour former le corps métallique du conducteur 2 (ici, de l'aluminium). De préférence, les pistes de contact 28 sont réalisées en cuivre, bien qu'en variante il est possible d'utiliser un autre matériau métallique, par exemple un alliage de cuivre tel que du bronze ou du laiton, ou de l'étain, ou du nickel, ou de l'argent, ou d'un alliage de ces matériaux, ou tout autre matériau approprié. Ainsi, le conducteur 2 présente une construction hybride, utilisant deux matériaux électriquement conducteurs différents.

On comprend que les pistes de contact 28 sont disposées sur le corps 2 et notamment sur la face principale 23. En d'autres termes, les pistes de contact 28 recouvrent une partie de la surface du corps métallique du conducteur 2. En variante, des rainures 24 et des pistes de contact 28 pourraient aussi être prévues sur la face opposée

Chaque rainure 24 est associée à deux pistes 28.

Par exemple, les pistes 28 présentent des dimensions identiques. Les pistes 28 associées à chaque rainure 24 sont disposées de façon symétrique de part et d'autre de ladite rainure 24.

Les pistes de contact 28 permettent d'assurer une bonne connectivité électrique avec les éléments de fixation 16 et/ou avec les plaques de fixation 14.

Par exemple, l'épaisseur de chaque piste de contact 28 est inférieure ou égale à 500 microns. De préférence, le matériau utilisé pour former les pistes de contact, qu'il s'agisse de cuivre, ou de tout autre matériau ou alliage tel qu'exposé ci-dessus, est déposé par un procédé de projection thermique.

Avantageusement, des dents de fixation 30 sont ménagées sur les bords latéraux 32 du corps 20. Autrement dit, les dents de fixation 30 s'étendent le long du corps 20, parallèlement à l'axe X2.

Cela permet de faciliter la fixation du conducteur 2 sur des parties

Comme visible sur la figure 3, le corps 20 comporte des ailettes de refroidissement 36, 38 disposées sur une face arrière 34 à l'opposé de la face principale 23 sur laquelle sont ménagées les rainures de fixation 24. Les ailettes de refroidissement 36, 38 sont alignées parallèlement à la direction longitudinale X2.

Par exemple, des ailettes de refroidissement 36 d'un premier type sont disposées latéralement de part et d'autre d'une partie centrale de la face arrière 34. Des ailettes de refroidissement 38 d'un deuxième type sont disposées le long de la partie centrale de la face arrière 34. Les ailettes de refroidissement 38 du deuxième type sont par exemple plus petites que les ailettes de refroidissement 36 du premier type.

Les ailettes 36 et 38 accroissent notablement le périmètre d'échange du conducteur 2 avec l'air environnant et permettent de dissiper la chaleur issue due à la circulation du courant électrique (effet Joule) dans le conducteur 2.

De façon optionnelle, le corps 20 peut comporter un traitement de surface tel qu'une peinture ou une anodisation (incolore ou non) pour favoriser les échange thermiques par radiation.

Grâce à l'invention, et notamment grâce à l'utilisation et à la disposition des pistes 28, il est possible de n'utiliser qu'un seul conducteur électrique par phase électrique tout en assurant la circulation de courants avec des intensités élevées, par exemple supérieures ou égales à 5000A ou à 6300 A.

On dispose ainsi d'une bonne connectivité électrique avec les éléments de connexion, sans pour autant avoir besoin d'utiliser un conducteur entièrement réalisé en cuivre, car cela renchérirait le coût de fabrication du conducteur, et cela accroîtrait son poids et son encombrement.

Un autre avantage est que, grâce aux conducteurs 2, il n'est plus nécessaire d'utiliser plusieurs barres de cuivre par phase électrique. Le conducteur 2 peut être facilement dimensionné pour que son calibre en courant électrique corresponde aux calibres normalisés utilisés par les appareils électriques et électrotechniques (par exemple, 1000 A, 1600 A, 2000 A, 3200 A, 4000 A, 5000 A, 6300 A). Ce n'est pas le cas des barres de cuivre, qui sont généralement disponibles sur le marché avec uniquement des dimensions prédéfinies, ce qui fait que le calibre obtenu par assemblage de ces barres de cuivre est différent des calibres électrotechniques normalisés. Pour atteindre l'un de ces calibres normalisés, il est souvent nécessaire de surdimensionner l'installation en utilisant plusieurs barres de cuivre, ce qui renchérit inutilement le coût de fabrication de l'installation.

De plus, n'utiliser qu'un seul conducteur 2 par phase électrique permet de réduire le nombre de pièce à fixer ou à boulonner, ce qui réduit le nombre d'éléments de fixation devant être utilisés. Cela réduit également le poids de l'installation 1 ainsi que son encombrement, ce qui améliore la ventilation et la dissipation de la chaleur.

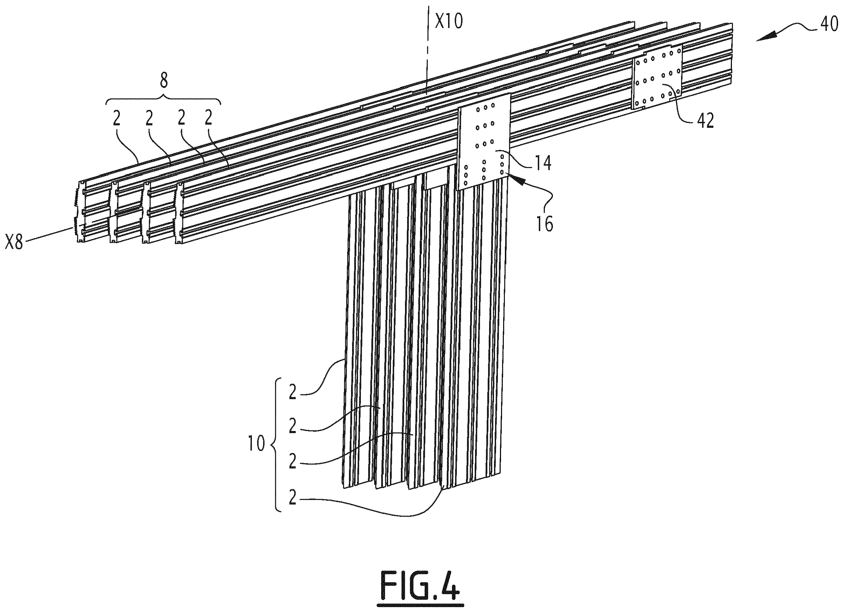

La figure 4 représente un ensemble de raccordement électrique 40, aussi nommé jeu de barres, comportant une pluralité de conducteurs électriques 2, au moins une plaque de connexion 14 et au moins un élément de fixation 16.

Comme bien visible sur la figure 4, le premier groupe 8 comporte quatre conducteurs 2 : un pour chaque phase plus un pour la ligne de neutre. Ces conducteurs sont alignés selon un premier axe X8 horizontal. Le deuxième groupe 10 comporte également quatre conducteurs 2 : un pour chaque phase et un pour la ligne de neutre, ces conducteurs étant sont alignés selon un axe X10 vertical.

Une interconnexion est réalisée entre les conducteurs respectifs des deux groupes 8 et 10, grâce à des plaques de connexion 14 (une pour chaque phase/neutre). Chaque plaque 14 est associée à deux conducteurs électriques 2 d'une même phase (ou de neutre, le cas échéant) pour les raccorder électriquement l'un avec l'autre.

Une plaque de connexion 42 peut être fixée sur un conducteur 2 pour favoriser la répartition des courants électriques dans ce conducteur 2. De telles plaques 42 peuvent être disposées à intervalles réguliers le long de chaque conducteur 2.

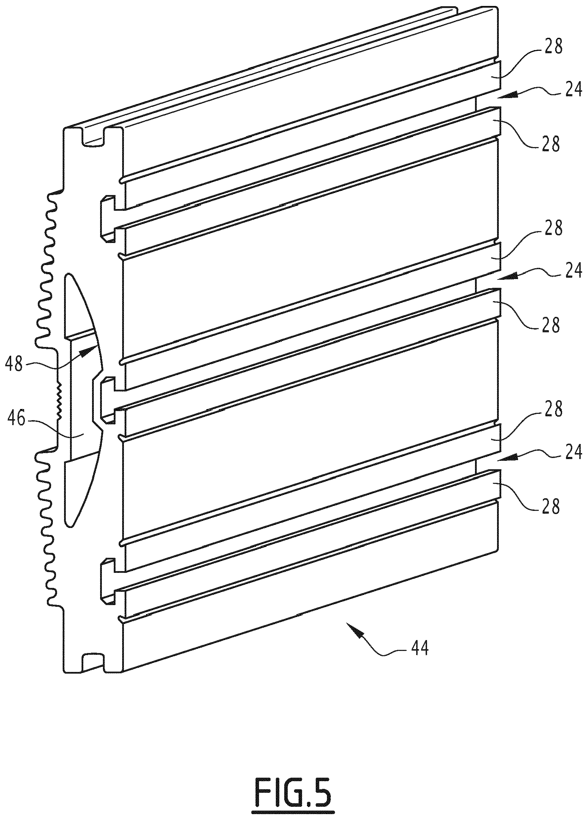

La figure 5 représente un conducteur électrique 44 selon un deuxième mode de réalisation de l'invention. Le conducteur électrique 44 est analogue ou similaire au conducteur électrique 2 du premier mode de réalisation, les éléments communs à ces deux modes de réalisation portant les mêmes références et n'étant pas décrits en détail.

Cependant, dans le deuxième mode de réalisation, le barreau métallique du conducteur électrique 44 comporte un évidement 46 qui s'étend longitudinalement le long du barreau. De préférence, l'évidement 46 comporte une paroi convexe 48 ici tournée vers la face avant 23.

Cette architecture permet de modifier le calibre en courant du conducteur électrique 44, tout en conservant les bénéfices exposés en référence au premier mode de réalisation.

Par exemple, le calibre du conducteur électrique 44 est égal à 5000 Ampères.

D'autres modes de réalisation peuvent être envisagés.

Les modes de réalisation et les variantes envisagés ci-dessus peuvent être combinés entre eux pour donner naissance à de nouveaux modes de réalisation.

## Revendications

1. Conducteur électrique (2) hybride, **caractérisé en ce qu'**il comporte:
- un corps (20) métallique en aluminium ayant une forme de barreau et s'étendant selon un axe longitudinal (X2),
- une pluralité de rainures de fixation (24) ménagées sur une face principale (23) du corps métallique, les rainures de fixation (24) s'étendant parallèlement à l'axe longitudinal, l'une des rainures de fixation étant disposée au centre de ladite face principale, les autres rainures de fixation étant disposées symétriquement de part et d'autre de la rainure de fixation centrale,
- des pistes de contact électrique (28) réalisées dans un matériau électriquement conducteur différent du corps métallique, et disposées par paire sur le corps métallique parallèlement aux bords latéraux de chaque rainure de fixation (24),
dans lequel le corps (20) comporte des ailettes de refroidissement (36, 38) disposées sur une face (34) à l'opposé de la face principale (23) sur laquelle sont ménagées les rainures de fixation, les ailettes de refroidissement étant alignées parallèlement à la direction longitudinale, des ailettes de refroidissement (36) d'un premier type étant disposées latéralement de part et d'autre d'une partie centrale de ladite face (34), des ailettes de refroidissement (38) d'un deuxième type étant disposées le long de la partie centrale de ladite face (34), les ailettes de refroidissement (38) du deuxième type étant plus petites que les ailettes de refroidissement (36) du premier type.

2. Conducteur électrique selon la revendication 1, dans lequel la section du corps (20) est de forme essentiellement parallélépipédique.

3. Conducteur électrique selon l'une quelconque des revendications précédentes, dans lequel le matériau électriquement conducteur des pistes de contact électrique (28) est du cuivre, ou un alliage de cuivre tel que du bronze ou du laiton, ou de l'étain, ou du nickel, ou de l'argent, ou d'un alliage de ces matériaux, ce matériau électriquement conducteur étant déposé sur la surface du corps (20), l'épaisseur de chaque piste de contact (28) étant inférieure ou égale à 500 microns.

4. Conducteur électrique selon l'une quelconque des revendications précédentes, dans lequel le corps (20) comporte un traitement de surface tel qu'une peinture ou une anodisation pour favoriser les échanges thermiques par radiation.

5. Conducteur électrique selon l'une quelconque des revendications précédentes, dans lequel des dents de fixation (30) sont ménagées sur les bords latéraux (32) du corps en aluminium.

6. Conducteur électrique selon l'une quelconque des revendications précédentes, dans lequel le corps (20) comporte un évidement (46) qui s'étend longitudinalement selon l'axe longitudinal, la section transversale de l'évidement comportant une paroi convexe (48) tournée vers la face principale (23) sur laquelle sont ménagées les rainures de fixation.

7. Conducteur électrique selon l'une quelconque des revendications précédentes, dans lequel le corps (20) comporte trois desdites rainures de fixation (24).

8. Ensemble de raccordement électrique (40), comportant une pluralité de conducteurs électriques conformes à l'une quelconque des revendications précédentes, au moins une plaque de connexion et au moins un élément de fixation, la plaque de connexion étant associée à au moins deux conducteurs électriques pour les raccorder électriquement l'un avec l'autre, ledit au moins un élément de fixation étant associé à la plaque de connexion et étant au moins partiellement reçu dans une rainure correspondante d'au moins un des conducteurs électriques.

9. Installation de distribution d'électricité (1), comportant une armature (4), un ensemble de raccordement électrique (40) conforme à la revendication 8 et au moins un appareil électrique (12) raccordé à au moins une partie des conducteurs de l'ensemble de raccordement.
